# EUROPÄISCHE PATENTANMELDUNG

(11) **EP 4 424 139 A1**
(43) Veröffentlichungstag der Anmeldung: **04.09.2024**
(21) Anmeldenummer: 23217043.1
(22) Anmeldetag: 15.12.2023
(51) Int. Cl.: A01D 43/08, A01D 43/10

(54) **KONDITIONIEREINRICHTUNG EINES FELDHÄCKSLERS UND FELDHÄCKSLER MIT EINER SOLCHEN KONDITIONIEREINRICHTUNG**

(30) Priorität: 03.03.2023 DE 102023105328
(71) Anmelder: CLAAS Saulgau GmbH, 88348 Bad Saulgau (DE)
(72) Erfinder: LÖFFLER, Niklas, 88367 Hohentengen (DE); DEUFEL, Tobias, 88605 Meßkirch-Menningen (DE); VOLK, Matthias, 33428 Harsewinkel (DE)
(74) Vertreter: Budach, Steffen

(57) **Zusammenfassung**

Konditioniereinrichtung (7) für einen Feldhäcksler zum Konditionieren von geerntetem Erntegut, insbesondere Corncracker zum Cracken von geerntetem Mais, mit einer ersten Walze (10), die um eine erste Drehachse (11) antreibbar ist, mit einer zweiten Walze (12), die um eine zweite Drehachse (13) antreibbar ist, wobei die erste Drehachse (11) und die zweite Drehachse (13) auf einer Geraden (16) liegen, wobei die erste Drehachse (11) und die zweite Drehachse (13) in Richtung der Geraden (16) gesehen, auf welcher dieselben liegen, einen Abstand (a) aufweisen, wobei die Gerade (16), auf welcher die erste Drehachse (11) und die zweite Drehachse (13) liegen, mit einer Horizontalen (17) einen Winkel (α) einschließt. Die erste Walze (10) und die zweite Walze (12) sind entlang der Geraden (16) auf welcher die erste Drehachse (11) und die zweite Drehachse (13) liegen, oder parallel zu dieser Geraden (16) unter Beibehaltung des Abstands (a) ihrer Drehachsen (11, 13) gemeinsam translatorisch verlagerbar. Alternativ oder zusätzlich ist die erste Walze (10) und/oder die zweite Walze (12) um eine Schwenkachse (19) derart verlagerbar, dass sich unter Beibehaltung des Abstands (a) ihrer Drehachsen (11, 13) der Winkel (α), welchen die Gerade (16), auf welcher die erste Drehachse (11) und die zweite Drehachse (13) liegen, mit der Horizontalen (17) einschließt, ändert.

## Beschreibung

Die Erfindung betrifft eine insbesondere als Corncracker ausgebildete Konditioniereinrichtung eines Feldhäckslers nach dem Oberbegriff des Anspruchs 1. Des Weiteren betrifft die Erfindung einen Feldhäcksler mit einer solchen Konditioniereinrichtung.

Bei Erntemaschinen unterscheidet man grundsätzlich zwischen solchen Erntemaschinen, bei welchen das Erntegut gedroschen wird, sowie zwischen Erntemaschinen, bei welchen das Erntegut gehäckselt wird. Dann, wenn als Erntegut eine Getreideart wie Weizen, Gerste oder Hafer oder als Erntegut Raps geerntet werden soll, kommen typischerweise Erntemaschinen zum Einsatz, die als Mähdrescher ausgeführt sind. Dann hingegen, wenn als Erntegut Mais, Miscanthus, Sorghum, Ackerfutter, Getreide oder Gras geerntet werden soll, kommen typischerweise als Erntemaschinen Feldhäcksler zum Einsatz.

Eine als Mähdrescher ausgebildete Erntemaschine, bei welcher ein zu erntendes Erntegut gedroschen wird, verfügt über ein Vorsatzgerät mit mehreren Mähorganen, die unter Ausführung eines scherenartigen Trennschnitts das Erntegut ernten.

Eine als Feldhäcksler ausgebildete Erntemaschine verfügt hingegen über ein als Maisgebiss ausgebildetes Vorsatzgerät mit mehreren umlaufend angetriebenen Mähorganen. Für die Ernte von Ackerfutter, Getreide oder Gras kommen spezielle Vorsatzgeräte, wie Feldfutter-, Ganzpflanzenschneidwerke oder eine Pick-up zum Einsatz. Zur Maiskolbenernte werden sogenannte Maispflücker als Vorsatzgerät am Feldhäcksler eingesetzt.

Aus der Praxis bekannte Feldhäcksler verfügen über eine Konditioniereinrichtung, die typischerweise als sogenannter Corncracker ausgebildet ist. Über eine solche Konditioniereinrichtung kann das geerntete Erntegut, insbesondere geerntete Mais- oder Getreidekörner, aufgebrochen und Stängelstücke aufgerieben werden. Hierzu verfügt eine Konditioniereinrichtung über profilierte Walzen, die um Drehachsen antreibbar sind, wobei zwischen den drehend angetriebenen Walzen das zu konditionierende Erntegut hindurchgefördert und beschleunigt wird.

Für eine ordnungsgemäße Konditionierung des Ernteguts im Bereich der Konditioniereinrichtung ist es von Bedeutung, dass die Konditioniereinrichtung das zu konditionierende Erntegut, insbesondere den aufzubrechenden Mais, definiert annimmt und ferner definiert in Richtung an einen Nachbeschleuniger des Feldhäckslers abgibt.

Hiervon ausgehend liegt der vorliegenden Erfindung die Aufgabe zugrunde, eine neuartige Konditioniereinrichtung eines Feldhäckslers sowie einen Feldhäcksler mit einer solchen Konditioniereinrichtung zu schaffen.

Diese Aufgabe wird durch eine Konditioniereinrichtung für einen Feldhäcksler nach Anspruch 1 gelöst.

Die erste Walze der Konditioniereinrichtung und die zweite Walze der Konditioniereinrichtung sind entlang der Geraden auf welcher die erste Drehachse und die zweite Drehachse liegen, oder horizontal unter Beibehaltung des Abstands ihrer Drehachsen gemeinsam translatorisch verlagerbar. Alternativ oder zusätzlich ist die erste Walze der Konditioniereinrichtung und/oder die zweite Walze der Konditioniereinrichtung um eine Schwenkachse derart verlagerbar, dass sich unter Beibehaltung des Abstands ihrer Drehachsen der Winkel, welchen die Gerade, auf welcher die erste Drehachse und die zweite Drehachse liegen, mit der Horizontalen einschließt, ändert.

Die Erfindung erlaubt eine vorteilhafte Gutannahme von zu konditionierendem Erntegut, indem die aufzunehmende Erntegutmatte möglichst mittig vom Crackerspalt angenommen oder von jeder Walze eine gleiche Menge Erntegut in den Crackspalt abgefördert wird sowie eine vorteilhafte Gutabgabe von konditioniertem Erntegut über die Konditioniereinrichtung. Insbesondere die Gutabgaberichtung in den Nachbeschleuniger, kann vorteilhaft beeinflusst werden, indem die Gutabgabe mehr oder weniger in Richtung des gutaufnehmenden Nachbeschleunigerspalts ausgerichtet und somit die Förderwirkung des Nachbeschleunigers verstärkt oder vermindert werden kann. Eine direkte Abgabe in den Nachbeschleunigerspalt erzielt die größte Förderwirkung des Nachbeschleuniger und eine davon abweichende Gutabgaberichtung vermindert dessen Förderwirkung.

Dann, wenn die beiden Walzen der Konditioniereinrichtung entlang der Geraden oder horizontal gemeinsam translatorisch verlagerbar sind, kann hierdurch die Gutannahme sowie die Gutabgabe im Bereich der Konditioniereinrichtung vorteilhaft beeinflusst werden. Insbesondere kann durch die translatorische Verlagerung die Gutannahme verbessert werden, da durch die translatorische Verlagerung die Position des Crackerspalts so einstellt werden kann, dass die aufzunehmende Erntegutmatte mittig auf den Crackerspalt trifft. Hierdurch werden vorteilhaft Gutturbolenzen bei der Annahme vermieden und eine möglichst geringe Gutumlenkung an den Walzen bei der Aufnahme erzielt. Weiterhin lassen sich durch die erfindungsgemäße translatorische Verlagerung, die Antriebs- oder Lagerlasten je Walze egalisieren und die Energiebilanz und der Verschleiß an der Konditioniereinrichtung verbessern beziehungsweise verringern.

Auch kann dann, wenn die erste Walze und/oder die zweite Walze um eine Schwenkachse verlagerbar sind, sowohl die Gutannahme als auch die Gutabgabe im Bereich der Konditioniereinrichtung verbessert werden. Vorteilhaft kann hiermit, wie zuvor beschrieben, die Förderwirkung des Nachbeschleunigers positiv beeinflusst werden.

Vorzugsweise ist die erste Walze der Konditioniereinrichtung mit einer ersten Drehzahl antreibbar, wobei die zweite Walze der Konditioniereinrichtung mit einer zweiten Drehzahl antreibbar ist. Auch dies dient der verbesserten Gutannahme sowie Gutabgabe von Erntegut im Bereich der Konditioniereinrichtung. Vorteilhaft kann hiermit, wie zuvor beschrieben, die Förderwirkung des Nachbeschleunigers positiv beeinflusst werden.

Vorzugsweise ist das Verhältnis zwischen der ersten Drehzahl und der zweiten Drehzahl derart anpassbar, dass dasselbe umso größer ist, je größer der Winkel ist, welchen die Gerade, auf welcher die erste Drehachse und die zweite Drehachse liegen, mit der Horizontalen einschließt. Hiermit kann das Erntegut sowohl vorteilhaft von der Konditioniereinrichtung angenommen als auch vorteilhaft von derselben abgegeben werden. So kann es vorteilhaft vorgesehen werden, dass die langsamer drehende Walze mit weniger Erntegut beaufschlagt und somit von jeder Walze annähernd die gleiche Menge Erntegut in den Crackerspalt gefördert wird. Für eine optimale Gutabgabe an den Nachbeschleuniger wird hierbei dann der Winkel so eingestellt, dass die gewünschte Förderwirkung des Nachbeschleunigers erzielt werden kann. Durch ein geändertes Verhältnis der Drehzahl kann vorteilhaft, wie zuvor beschrieben, die Erntegutabgaberichtung in den Nachbeschleuniger geändert werden. Wird diese Drehzahländerung aufgrund gewünschter Änderung der Konditionierwirkung des Corncrackers durchgeführt, kann durch eine Veränderung des Winkels, die sich durch die Veränderung des Verhältnisses der Drehzahlen einstellende Änderung der Erntegutabgabe, wieder optimal für die Gutabgabe an den Nachbeschleuniger korrigiert eingestellt werden.

Vorzugsweise erfolgt die Verlagerung von der ersten Walze und der zweiten Walze horizontal oder parallel zur Horizontalen (vorzugsweise der gesamte Corncracker) oder entlang der Geraden, auf welcher die erste Drehachse und die zweite Drehachse liegen. Die Position der Konditioniereinrichtung bzw. die Walzen werden automatisch an die Dicke des Erntegutflusses bzw. des Erntegutpolsters angepasst.

Alternativ oder zusätzlich erfolgt die Verlagerung von der ersten Walze und/oder der zweiten Walze bzw. des gesamten Crackers automatisch um eine Schwenkachse. Die Schwenk-Position der Konditioniereinrichtung bzw. der Walzen wird automatisch an die Dicke des Erntegutpolsters angepasst. Dies ist bevorzugt, um die Gutannahme der Konditioniereinrichtung bzw. der Walzen und/oder die Gutabgabe des der Konditioniereinrichtung an den Nachbeschleuniger zu optimieren.

Der erfindungsgemäße Feldhäcksler ist in Anspruch 13 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine Seitenansicht eines Feldhäckslers;
- Fig. 2: ein Detail einer ersten Konditioniereinrichtung;
- Fig. 3a: ein Detail einer zweiten Konditioniereinrichtung in einem ersten Zustand;
- Fig. 3b: das Detail Der Fig. 3a in einem zweiten Zustand.

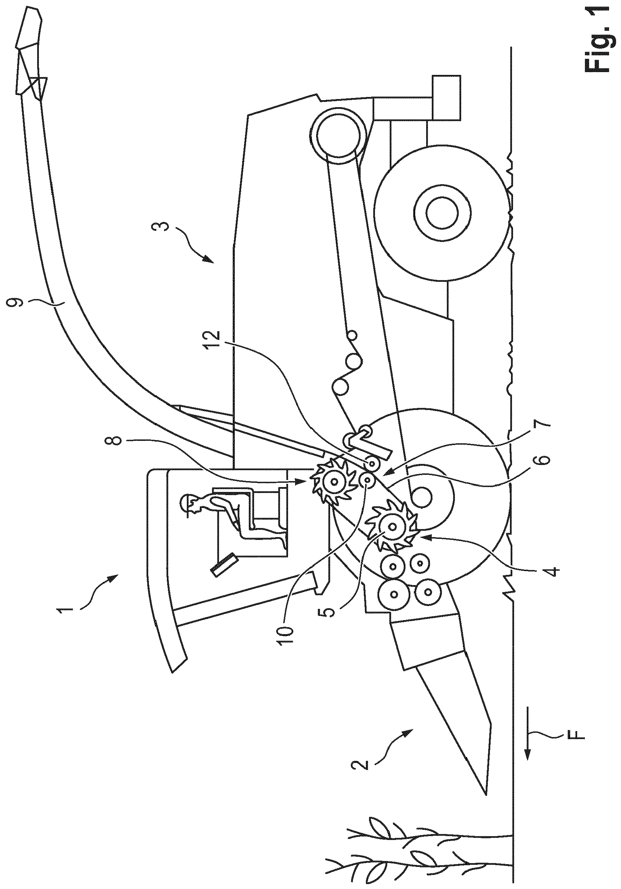

Fig. 1 zeigt eine als Feldhäcksler 1 ausgebildete Erntemaschine. Der Feldhäcksler 1 umfasst ein Vorsatzgerät 2, welches an ein Trägerfahrzeug 3 gekoppelt ist und vom Trägerfahrzeug 3 zu Erntearbeiten in Fahrtrichtung, die der Ernterichtung F entspricht, fortbewegt wird. Beim Vorsatzgerät 2 handelt es sich um ein sogenanntes Maisgebiss zum Abtrennen und Aufnehmen von stängelartigem Erntegut, wie zum Beispiel Mais, Miscanthus, Sorghum oder Getreide.

Das mit Hilfe des Vorsatzgeräts 2 abgetrennte Erntegut wird innerhalb des Vorsatzgeräts durch das Vorsatzgerät 2 bewegt und von einem Häckselwerk 4 des Feldhäckslers 1 weiterverarbeitet. Das Häckselwerk 4 umfasst eine rotorseitige Häckseltrommel 5 sowie ein unterhalb der Häckseltrommel 5 angeordnetes, statorseitiges Trommelblech 6.

Stromabwärts des Häckselwerks 4 des Feldhäckslers 1 ist eine Konditioniereinrichtung 7 und stromabwärts der Konditioniereinrichtung 7 ist ein Nachbeschleuniger 8 angeordnet. Die Konditioniereinrichtung 7 wird auch als Corncracker bezeichnet. Der Nachbeschleuniger 8 dient insbesondere dem Einbringen kinetischer Energie in das Erntegut, um dasselbe mit ausreichender Transportgeschwindigkeit durch einen Auswurfkrümmer 9 zu fördern. Der Nachbeschleuniger 8 besteht in der Regel aus einer im Förderschacht angeordneten, mit mehreren umfangseitigen Wurfpaddel ausgestalteten rotierenden Trommel, welche auf Abstand zur Schachtrückwand, in das von der Konditioniereinrichtung 7 abgeförderte Erntegut eingreifen und dieses zur Abgabe in den Auswurfkrümmer 9 beschleunigt. Der Abstand der Förderpaddel zur Schachtrückwand, wird als Nachbeschleunigerspalt bezeichnet und kann, je nach Bauart des Feldhäckslers1, einstellbar ausgeführt sein.

Die Konditioniereinrichtung 7 verfügt über eine erste Walze 10, die um eine erste Drehachse 11 antreibbar ist. Ferner verfügt die Konditioniereinrichtung 7 über eine zweite Walze 12, die um eine zweite Drehachse 13 antreibbar ist. Die Walzen 10, 12 können beispielsweise jeweils getrennt oder über einen gemeinsamen Antrieb über den Hauptantrieb des Feldhäcksler 1 oder über einen Abtrieb des Nachbeschleunigers 8 mit einer Gesamtdrehzahl angetrieben werden, wobei in den jeweiligen Antriebszweigen Mittel zur Variation der Gesamtdrehzahl oder der jeweiligen Antriebsdrehzahl verbaut sein können. Weiterhin sind vom Hauptantrieb oder Nachbeschleuniger 8 unabhängige, in der Drehzahl konstant oder variabel ausgestaltete, Antriebe aus dem Stand der Technik bekannt und denkbar.

Weiterhin kann die Gesamtdrehzahl in Abhängigkeit von der zu verarbeitenden Erntegutmenge EG eingestellt werden. Bei zunehmender Erntegutmenge EG erhöht sich die Dicke d und eine erfindungsgemäß höhere Gesamtdrehzahl bewirkt vorteilhaft ein schnelleres Abfördern des Erntegutes und beugt Turbulenzen und Gutstauungen vor der Konditioniereinrichtung 7 und im gesamten nachgelagerten Förderschacht vor. Durch die erhöhte Gesamtdrehzahl der Konditioniereinrichtung 7 wird auch eine dünnere Gutmatte in der Konditioniereinrichtung 7 erzielt, welche im Ergebnis mit einer besseren Konditionierung des Erntegutes EG einhergeht.

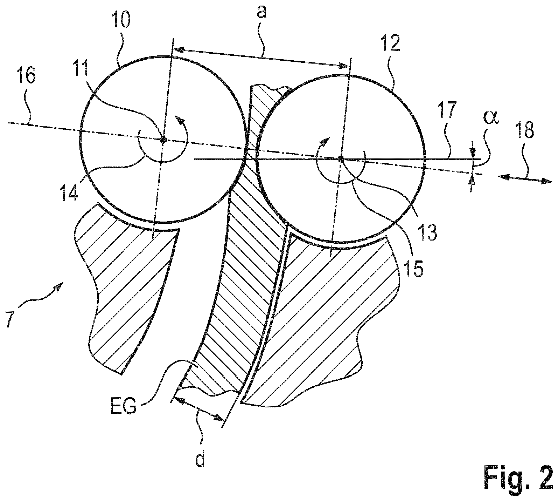

In Fig. 2 visualisieren Pfeile 14, 15 die Drehrichtungen der Walzen 10, 12. Der Fig. 2 kann entnommen werden, dass die Walzen 10, 12 gegensinnig angetrieben werden, um das Erntegut EG durch die Konditioniereinrichtung 7 hindurch zu fördern. Die erste Drehrichtung 14 der ersten Walze 10 ist demnach gegensinnig zur zweiten Drehrichtung 15 der zweiten Walze 12.

Diejenige Walze 10 der Konditioniereinrichtung 7, die in Ernterichtung F weiter vorne positioniert ist, wird nachfolgend als erste Walze 10 bezeichnet, wohingegen diejenige Walze 12 der Konditioniereinrichtung 7, die in Ernterichtung F gesehen weiter hinten positioniert ist, als zweite Walze 12 der Konditioniereinrichtung 7 bezeichnet wird.

Die Drehachsen 11, 13 der Walzen 10, 12 der Konditioniereinrichtung 7 verlaufen parallel zueinander.

Die Drehachsen 11, 13 der Walzen 10, 12, liegen auf einer Geraden 16, wobei die Gerade 16 lotgerecht zur Förderrichtung des aufzunehmenden Erntegutes EG ausgerichtet sein kann.

Die Gerade 16, auf welcher die Drehachsen 11, 13 der Walzen 10, 12 liegen, erstreckt sich durch die Mittelpunkte der Walzen 10, 12 bzw. durch die Mittelpunkte der Drehachsen 11, 13.

Die Gerade 16, auf welcher die Drehachsen 11, 13 der Walzen 10, 12 liegen, verläuft in Radialrichtung der Walzen 10, 12.

Diese Gerade 16, auf welcher die Drehachsen 11, 13 der Walzen 10, 12 der Konditioniereinrichtung 7 liegen, schließt mit einer Horizontalen 17 einen Winkel α ein. Die Horizontale 17 verläuft parallel zur Ernterichtung F.

In Richtung der Geraden 16 gesehen, auf welcher die Drehachsen 11, 13 der Walzen 10, 12 liegen, weisen die Drehachsen 11, 13 der Walzen 10, 12 einen Abstand a auf.

Um Erntegut EG im Bereich der Konditioniereinrichtung 7 optimal zu verarbeiten, ist im Ausführungsbeispiel der Fig. 2 vorgesehen, dass die erste Walze 10 der Konditioniereinrichtung 7 und die zweite Walze 12 der Konditioniereinrichtung 7 entlang der Geraden 16, auf welcher die Drehachsen 11, 13 der Walzen 10, 12 liegen, oder horizontal, jeweils unter Beibehaltung des Abstands a ihrer Drehachsen 11, 13, gemeinsam translatorisch verlagerbar sind. In Fig. 2 verdeutlicht ein Doppelpfeil 18 die gemeinsame translatorische Verlagerbarkeit der Walzen 10, 12 der Konditioniereinrichtung 7 entlang der Geraden 16, auf welcher die Drehachsen 11, 13 der Walzen 10, 12 liegen.

Diese translatorische Verlagerung der Walzen 10, 12 erfolgt lotrecht oder senkrecht zum Erntegutstrom durch die Konditioniereinrichtung 7.

Über diese translatorische Verlagerung der beiden Walzen 10, 12 der Konditioniereinrichtung 7 bei Beibehaltung des Abstands a ihrer Drehachsen 11, 13 können die beiden Walzen 10, 12 der Konditioniereinrichtung 7 so zum Erntegut EG ausgerichtet werden, dass das Erntegut EG gleichförmig, also zu in etwa gleichen Anteilen, in Richtung auf die beiden Walzen 10, 12 gefördert wird. Hierdurch lässt sich insbesondere das Erntegut EG optimal von der Konditioniereinrichtung 7 aufnehmen sowie auch von der Konditioniereinrichtung 7 optimal in Richtung auf den in Fig. 2 nicht gezeigten Nachbeschleuniger 8 abgeben.

Vorzugsweise sind beide Walzen 10, 12 in einem gemeinsamen, nicht gezeigten Gehäuse der Konditioniereinrichtung 7 gelagert und über dieses Gehäuse 7 translatorisch in Richtung der Gerade 16 oder horizontal in der Ebene 17 translatorisch verlagerbar.

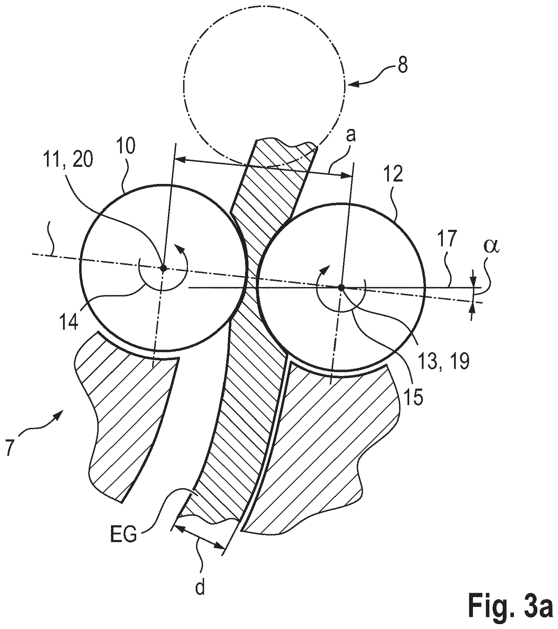

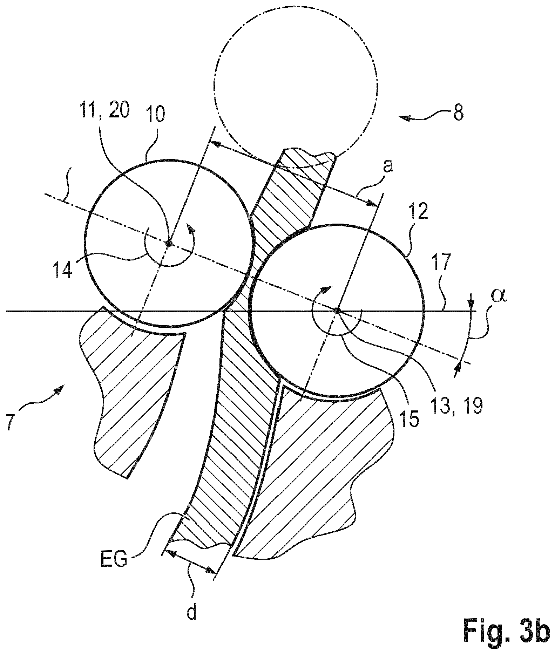

Fig. 3a und 3b zeigen ein zweites Ausführungsbeispiel einer erfindungsgemäßen Konditioniereinrichtung 7 eines Feldhäckslers 1, bei welcher die erste Walze 10 um eine Schwenkachse 19 oder die zweite Walze 12 um eine Schwenkachse 20 derart verlagerbar ist, dass sich unter Beibehaltung des Abstands a der Drehachsen 11, 13 der Walzen 10, 12 der Winkel α, welchen die Gerade 16, auf welcher die erste Drehachse 11 und die zweite Drehachse 13 liegen, mit der Horizontalen 17 einschließt, ändert.

In Fig. 3a, 3b fällt dabei die Schwenkachse 19 mit der zweiten Drehachse 13 der zweiten Walze 12 zusammen, derart, dass die erste Drehachse 11 der ersten Walze 10 um die zweite Drehachse 13 der zweiten Walze 12 entlang eines Kreissegments schwenkbar bzw. verlagerbar ist.

Im Unterschied zu dem in Fig. 3a und 3b gezeigten Ausführungsbeispiel ist es auch möglich, dass die zweite Drehachse 13 der zweiten Walze 12 um die erste Drehachse 11 entlang eines Kreissegments schwenkbar bzw. verlagerbar ist. In diesem Fall fällt die Schwenkachse 20 mit der Drehachse 11 der ersten Walze 10 zusammen.

Ferner ist es möglich, dass die Schwenkachsen 19, 20 weder mit der ersten Drehachse 11 noch mit der zweiten Drehachse 13 zusammenfallen.

Dann, wenn die Schwenkachsen 19, 20 weder mit der ersten Drehachse 11 noch mit der zweiten Drehachse 13 der beiden Walzen 10, 12 zusammenfallen, ist sowohl die erste Walze 10 als auch die zweite Walze 12 um die Schwenkachsen 19, 20 jeweils entlang eines jeweiligen Kreissegments verlagerbar.

Auch im Ausführungsbeispiel der Fig. 3a und 3b kann einerseits die Gutannahme über die Konditioniereinrichtung 7 verbessert werden, auch die Gutabgabe des Ernteguts EG in Richtung auf den Nachbeschleuniger 8.

In einer vorteilhaften Weiterbildung ist vorgesehen, dass die erste Walze 10 mit einer ersten Drehzahl n1 und die zweite Walze 12 mit einer zweiten Drehzahl n2 antreibbar ist. Dabei ist Verhältnis n1/n2 zwischen der ersten Drehzahl n1 und der zweiten Drehzahl n2 vorzugsweise abhängig von dem Winkel α anpassbar, welchen die Gerade 16, auf welcher die erste Drehachse 11 und die zweite Drehachse 13 liegen, mit der Horizontalen 17 einschließen. Dabei ist das Verhältnis n1/n2 zwischen der ersten Drehzahl n1 der ersten Walze 10 und der Drehzahl n2 der zweiten Walze 12 vorzugsweise umso größer, je größer der Winkel α zwischen der Geraden 16 und der Horizontalen 17 ist.

Die Anpassung des Drehzahlverhältnisses n1/n2 zwischen der ersten Drehzahl n1 der ersten Walze 10 und der zweiten Drehzahl n2 der zweiten Walze 12 abhängig vom Winkel α zwischen der Geraden 16, auf welcher die Drehachsen 11, 13 der Walzen 10, 12 liegen, und der Horizontalen 17 erfolgt vorzugsweise automatisch.

Ferner ist vorzugsweise vorgesehen, im Ausführungsbeispiel der Fig. 2 die Verlagerung der ersten Walze 10 und der zweiten Walze 12 entlang der Geraden 16, auf welcher die Drehachsen 11, 13 derselben liegen, oder parallel zur Horizontalen 17 automatisch angepasst an die Dicke d des Ernteguts EG vorzunehmen.

Auch kann im Ausführungsbeispiel der Fig. 3a, 3b vorgesehen sein, die Verlagerung der ersten Walze 10 und/oder der zweiten Walze 12 um die Schwenkachse 19 zur Beeinflussung des Winkles α zwischen der Geraden, auf welcher die Drehachsen 11, 13 der Walzen 10, 12 liegen, automatisch an die Dicke d des Ernteguts EG anzupassen.

Es ist möglich, die beiden Ausführungsbeispiele der Fig. 2 und der Fig. 3a, 3b so zu kombinieren, dass sowohl eine translatorische Verlagerung der erste Walze 10 und der zweiten Walze 12 entlang der Geraden 16 oder parallel zur Horizontalen 17 als auch eine schwenkende Verlagerung mindestens einer der Walzen 10, 12 um die Schwenkachsen 19, 20 jeweils unter Beibehaltung des Abstands a ihrer Drehachsen 11, 13 möglich ist. Diese Bewegung kann beispielsweise durch eine Viergelenklagerung des Gehäuses der Konditioniereinrichtung 7 oder durch eine translatorische Verschiebung der Walzen 10, 12 auf einer zum Erntegut oder zur Horizontalen 17 gekrümmt verlaufenden Ebene erfolgen, wobei mit zunehmender Verlagerung aus der Startposition, die der Stellung bei geringem Erntegutdurchsatz entspricht, die Abweichung zur lotrechten Ausrichtung zunimmt, d.h. der Winkel α zunimmt und bei abnehmender Verlagerung wieder abnimmt.

Eine translatorische Verlagerung oder einer Veränderung des Winkels α bewirkt eine veränderte Abgabe des Erntegutes an den Nachbeschleuniger 8, indem das Erntegut nicht mehr direkt in den Nachbeschleunigerspalt abgegeben wird. Nach einer translatorischen Verlagerung optimal auf die aufzunehmende Erntegutmenge EG, wird erfindungsgemäß der Winkel α so korrigiert, dass das abgegebene konditionierte Erntegut wieder optimal auf den Nachbeschleunigerspalt ausgerichtet abgegeben wird.

Wird anderweitig eine Veränderung der Förderwirkung des Nachbeschleunigers vorgegeben und gewünscht, kann der Winkel α erfindungsgemäß so verändert werden, dass zum Beispiel eine gewünschte verminderte Förderwirkung des Nachbeschleunigers 8, durch eine Verringerung des Winkel α erreicht wird. Die eingestellte translatorische Verlagerung bleibt dabei unverändert bestehen.

Die Erfindung betrifft weiterhin einen Feldhäcksler 1 mit einer erfindungsgemäßen Konditioniereinrichtung 7.

Mit der Erfindung ist eine optimale Annahme von Erntegut sowie Abgabe von Erntegut im Bereich der Konditioniereinrichtung 7 des Feldhäckslers 1 möglich. Hiermit kann die Konditioniereinrichtung 7 besonders effizient betrieben werden. Der Nachbeschleuniger 8, welcher der Konditioniereinrichtung 7 nachgelagert ist, kann dann Erntegut optimal annehmen und mit der gewünschten Förderwirkung in den Bereich des Auswurfkrümmers 9 fördern. Durch einen gleichmäßigen Gutfluss, ohne starke Gutumlenkungen können auf dem gesamten Förderweg in der Konditioniereinrichtung 7, dem Nachbeschleuniger 8 und im Auswurfkrümmer 9 Turbulenzen vermieden werden. Dadurch kann auch der Nachbeschleuniger 8 vorteilhaft effizienter betrieben werden.

Die Konditioniereinrichtung 7 kann unabhängig von der Dicke d des Ernteguts EG, welches in Richtung auf die Konditioniereinrichtung 7 gefördert wird und von der Konditioniereinrichtung 7 zu bearbeiten ist, mit einer nahezu konstanten Leistungsaufnahme betrieben werden.

Es ist möglich, die Walzen 10, 12 der Konditioniereinrichtung 7 so zum Erntegut EG auszurichten, dass beide Walzen 10, 12 gleichförmig mit Erntegut EG beschickt werden, dass also auf beide Walzen 10, 12 in etwa gleiche Anteile des Ernteguts EG gefördert werden. Das Erntegut EG läuft dann zentrisch zwischen den Walzen 10, 12 ein.

Durch die automatisierte mittige Positionierung des Spalts zwischen der ersten Walze 10 und der zweiten Walze 12 hinsichtlich des Erntegutflusses führt zu einer verbesserten Gutannahme des Corncrackers. Durch die geringere Umlenkung des Ernteguts EG vor den Walzen 10, 12 und durch einen geradlinigeren und homogeneren Gutfluss wird eine vorteilhafte Effizienzsteigerung erreicht. Der Ernteguteinlauf muss nicht zwangsweise zentrisch sein. Bei größer Differenzdrehzahl, die von der gewünschten Konditionierwirkung der Einrichtung 7 vorgegeben werden kann, fördert die Walze mit der höheren Drehzahl mehr Erntegut ab, daher kann für einen optimalen Gutfluss in die Konditioniereinrichtung 7, auch diese Walze mit der höheren Drehzahl mit mehr Erntegut beaufschlagt werden. Die Positionierung des Spalts kann durch die erfindungsgemäße translatorische Verschiebung und/oder durch die Einstellung des Winkels α erfolgen.

Zur Steuerung der Position der Konditioniereinrichtung kann eine Schichtdickenmessung oder eine Durchsatzmessung des Ernteguts EG als Stellgröße vorgesehen werden. Weiterhin können auch Lagerkräfte der Walzen 10, 12 und/oder auch Antriebsleistungen der Walzen als Maß für die translatorische Verschiebung, des Verhältnisses der Drehzahlen n1/n2 und/oder des Winkels α vorgesehen sein.

Es sei darauf hingewiesen, dass die Anpassung des Verhältnisses n1/n2 zwischen der ersten Drehzahl n1 der ersten Walze 10 und der zweiten Drehzahl n2 der zweiten Walze 12 der Konditioniereinrichtung 7 auch unabhängig von der Verlagerung der Walzen 10, 12 ausschließlich in Abhängigkeit der Dicke d des Ernteguts EG vorgenommen werden kann. Hierbei fördert dann beispielsweise die Walze 10 bei größerer Dicke d durch eine höhere Drehzahl mehr Erntegut ab.

### Bezugszeichenliste

- 1: Feldhäcksler
- 2: Vorsatzgerät/Maisgebiss
- 3: Trägerfahrzeug
- 4: Häckselwerk
- 5: Häckseltrommel
- 6: Trommelblech
- 7: Konditioniereinrichtung
- 8: Nachbeschleuniger
- 9: Auswurfkrümmer
- 10: erste Walze
- 11: erste Drehachse
- 12: zweite Walze
- 13: zweite Drehachse
- 14: erste Drehrichtung
- 15: zweite Drehrichtung
- 16: Gerade
- 17: Horizontale
- 18: translatorische Verlagerbarkeit
- 19: Schwenkachse
- 20: Schwenkachse
- EG: Erntegut
- a: Abstand
- d: Dicke

## Patentansprüche

1. Konditioniereinrichtung (7) für einen Feldhäcksler (1) zum Konditionieren von geerntetem Erntegut, insbesondere Corncracker zum Cracken von geerntetem Mais,
mit einer ersten Walze (10), die um eine erste Drehachse (11) antreibbar ist,
mit einer zweiten Walze (12), die um eine zweite Drehachse (13) antreibbar ist,
wobei die erste Drehachse (11) und die zweite Drehachse (13) auf einer Geraden (16) liegen,
wobei die erste Drehachse (11) und die zweite Drehachse (13) in Richtung der Geraden (16) gesehen, auf welcher dieselben liegen, einen Abstand (a) aufweisen,
wobei die Gerade (16), auf welcher die erste Drehachse (11) und die zweite Drehachse (13) liegen, mit einer Horizontalen (17) einen Winkel (α) einschließt,
**dadurch gekennzeichnet, dass**
die erste Walze (10) und die zweite Walze (12) entlang der Geraden (16) auf welcher die erste Drehachse (11) und die zweite Drehachse (13) liegen, oder parallel zu dieser Geraden (16) oder parallel zur Horizontalen (17) unter Beibehaltung des Abstands (a) ihrer Drehachsen (11, 13) gemeinsam translatorisch verlagerbar sind, und/oder
die erste Walze (10) und/oder die zweite Walze (12) um eine Schwenkachse (19) derart verlagerbar ist, dass sich unter Beibehaltung des Abstands (a) ihrer Drehachsen (11, 13) der Winkel (α), welchen die Gerade (16), auf welcher die erste Drehachse (11) und die zweite Drehachse (13) liegen, mit der Horizontalen (17) einschließt, ändert.

2. Konditioniereinrichtung (7) nach Anspruch 1, **dadurch gekennzeichnet, dass** die Schwenkachse (20) mit der ersten Drehachse (11) zusammenfällt, derart, dass die zweite Walze (12) um die erste Walze (10) und damit die erste Drehachse (11) entlang eines Kreissegments verlagerbar ist.

3. Konditioniereinrichtung (7) nach Anspruch 1, **dadurch gekennzeichnet, dass** die Schwenkachse (19) mit der zweiten Drehachse (13) zusammenfällt, derart, dass die erste Walze (10) um die zweite Walze (12) und damit die zweite Drehachse (13) entlang eines Kreissegments verlagerbar ist.

4. Konditioniereinrichtung (7) nach Anspruch 1, **dadurch gekennzeichnet, dass** die Schwenkachse (19, 20) weder mit der ersten Drehachse (11) noch mit der zweiten Drehachse (13) zusammenfällt, derart, dass die erste Walze (10) und die zweite Walze (12) um die Schwenkachse (19, 20) jeweils entlang eines jeweiligen Kreissegments verlagerbar sind.

5. Konditioniereinrichtung (7) nach einem der Ansprüche 1 bis 4, **dadurch gekennzeichnet, dass**
die erste Walze (10) mit einer ersten Drehzahl antreibbar ist,
die zweite Walze (12) mit einer zweiten Drehzahl antreibbar ist,
ein Verhältnis zwischen der ersten Drehzahl und der zweiten Drehzahl abhängig vom dem Winkel (α), welchen die Gerade (16), auf welcher die erste Drehachse (11) und die zweite Drehachse (13) liegen, mit der Horizontalen (17) einschließt, automatisch anpassbar ist.

6. Konditioniereinrichtung (7) nach Anspruch 5, **dadurch gekennzeichnet, dass** das Verhältnis zwischen der ersten Drehzahl und der zweiten Drehzahl derart anpassbar ist, dass dasselbe umso größer ist, je größer der Winkel (α) ist, welchen die Gerade (16), auf welcher die erste Drehachse (11) und die zweite Drehachse (13) liegen, mit der Horizontalen (17) einschließt.

7. Konditioniereinrichtung (7) nach Anspruch 5, **dadurch gekennzeichnet, dass** die erste und die zweite Walze (10,12) über einen gemeinsamen Antrieb mit einer Gesamtdrehzahl antreibbar sind, wobei die Gesamtdrehzahl variabel einstellbar ist und/oder die Gesamtdrehzahl in abhängig vom Winkel (α) automatisch anpassbar ist.

8. Konditioniereinrichtung (7) nach Anspruch 5, **dadurch gekennzeichnet, dass** das Verhältnis n1/n2 zwischen der ersten Drehzahl n1 und der zweiten Drehzahl n2 abhängig von der translatorischen Verschiebung der Walzen ist.

9. Konditioniereinrichtung (7) nach Anspruch 5, **dadurch gekennzeichnet, dass** die Gesamtdrehzahl abhängig von der translatorischen Verschiebung der Walzen (10, 12) ist.

10. Konditioniereinrichtung (7) nach einem der Ansprüche 1 bis 6, **dadurch gekennzeichnet, dass** die Verlagerung von der ersten Walze (10) und der zweiten Walze (12) entlang oder parallel zu der Geraden (16) oder parallel zur Horizontalen (17), auf welcher die erste Drehachse (11) und die zweite Drehachse (13) liegen, automatisch angepasst an die Dicke eines Erntegutflusses erfolgt.

11. Konditioniereinrichtung (7) nach einem der Ansprüche 1 bis 7, **dadurch gekennzeichnet, dass** die Verlagerung von der ersten Walze (10) und/oder der zweiten Walze (12) um die Schwenkachse (19, 20) automatisch angepasst an die Dicke eines Erntegutflusses erfolgt.

12. Konditioniereinrichtung (7) nach einem der Ansprüche 1 bis 11, **dadurch gekennzeichnet, dass** die Verlagerung von der ersten Walze (10) und der zweiten Walze (12) entlang oder parallel zu der Geraden (16) oder parallel zur Horizontalen (17), auf welcher die erste Drehachse (11) und die zweite Drehachse (13) liegen, und die Verlagerung von der ersten Walze (10) und/oder der zweiten Walze (12) um die Schwenkachse (19, 20) automatisch angepasst an die Dicke eines Erntegutflusses erfolgt.

13. Feldhäcksler (1) mit einer Konditioniereinrichtung (7) nach einem der Ansprüche 1 bis 12.
